# EUROPEAN PATENT SPECIFICATION

(11) **EP 4 124 243 B1**
(45) Date of publication and mention of the grant of the patent: **04.12.2024**
(21) Application number: 21188789.8
(22) Date of filing: 30.07.2021
(51) Int. Cl.: A21D 13/28, A23L 5/44, A23L 29/30, A23L 33/105, A21D 13/20, A21D 13/22, A23L 29/231, A23L 29/238, A23L 29/25, A23L 29/256, A23L 29/262, A23L 29/281

(54) **EDIBLE COATING COMPOSITION FOR A BAKERY PRODUCT**
ESSBARE BESCHICHTUNGSZUSAMMENSETZUNG FÜR EIN BACKPRODUKT
COMPOSITION DE REVÊTEMENT COMESTIBLE POUR UN PRODUIT DE BOULANGERIE

(43) Date of publication of application: 01.02.2023
(73) Proprietor: Sonneveld Group B.V., 3356 LJ Papendrecht (NL)
(72) Inventor: Oostendorp, Alexander Dhr., 3356 LJ Papendrecht (NL); Weegels, Peter Louis Dhr., 3356 LJ Papendrecht (NL)
(74) Representative: Arnold & Siedsma

(56) References cited:
- WO-A1-2004/010793
- WO-A1-2013/061061
- US-A- 4 255 456
- US-A- 5 340 598
- US-A- 5 756 140
- US-B2- 6 663 904

## Description

The present invention relates to an edible coating composition for a bakery product, preferably a coating composition for a pretzel or bagel, wherein the composition is an aqueous solution comprised of a colorant suitable for consumption, mono and/or disaccharides, and hydrocolloid agents, as defined in the appended claims.

The present invention further relates to a bakery product comprising the edible coating composition and a method for producing a bakery product, preferably a pretzel or bagel, using the coating composition, as defined in the appended claims.

The pretzel is a century old type of bread. These bakery products are a snack food made from dough that is commonly shaped into a two looped knot and have a hard, shiny outer brown color surface. Salt crystals are often sprinkled on its surface to make them taste more appealing. The pretzel market in the United States is about $560 million a year with over 136.2 million kg of pretzels being produced. The pretzel market has grown in recent years because pretzels are considered a healthier, fat-free snack.

The primary ingredients in pretzel dough include flour, water, yeast, shortening, and sugar. Each of the ingredients has an important effect on the dough during manufacture and the properties of the final product. During the production of a pretzel, the dough after kneading is formed in the well known pretzel form. Pretzels are then often frozen to make the dough firm. After freezing the dough pieces are submerged in a caustic alkaline solution comprised of water and approximately 4% lye or sodium carbonate having a pH of 14. The pretzels are dipped in the bath for 10-20 seconds and typically float when they are finished. This process provides for a thin alkaline coating and gelatinizes the starch on the pretzel's surface, allowing the salt to adhere more readily.

After the application of the caustic solution the dough pieces are frozen again, and before baking slightly thawn, cut, and finally baked. During baking the alkaline coating on the pretzel chemically reacts (Maillard reaction) with the dough, wherein the amino acids and reducing sugars are reacting with each other, and caramelizes the gelatinized starch, to provide the pretzel its typical shiny and crusty outer brown color surface and taste.

However, due to the very caustic nature of this lye solution, for health and safety reasons the baker should use eye protection and gloves when producing the pretzel. This way of making pretzels is dangerous because the caustic solution used can cause severe eye or skin damage. Also, in many countries it is not allowed to work in a bakery with a lye solution. Therefore it is very difficult to make fresh pretzels and many safety precautions need to be taken before the use of such lye solutions are allowed in the bakery production process. In fact, because the use of lye in bakery products is prohibited in many European countries (except Germany), other European bakers are not allowed to make fresh pretzels at this moment.

US6663904B2 relates to a shelf-stable soft pretzel product that maintains appearance, texture and taste over a long shelf life, which is prepared by a method that substitutes a number of preparation steps in place of the traditional caustic bath preparation step, in order to lower the pretzel's pH in addition to other microbial spoilage hurdle strategies.

Considering the above, there is a need in the art for a coating composition for the production of a bakery product, preferably pretzels, without the requirement of stringent safety precautions, i.e. when using caustic agents or solutions coating the bakery product, while maintaining the quality, taste and appearance of the bakery product, such as the pretzel. Furthermore, there is a need in the art for an alternative method for the production of bakery products that would normally require stringent safety precautions such as the production of pretzels, wherein the method is easy to apply in a simple bakery process, i.e. without the use of caustic agents or solutions, while maintaining the quality, taste and look and feel of the bakery product, such as the pretzel.

It is an object of the present invention, amongst other objects, to address the above need in the art. The object of present invention, amongst other objects, is met by the present invention as outlined in the appended claims.

Specifically, the above object, amongst other objects, is met, according to a first aspect, by the present invention by an edible coating composition for a bakery product, wherein the composition is a an aqueous solution comprised of a colorant suitable for consumption, 15 to 40 wt%, preferably 20 to 35 wt%, more preferably 25 to 30 wt% of mono and/or disaccharides, and 0.1 to 1 wt%, preferably 0.2 to 0.8 wt %, more preferably 0.4 to 0.6 wt% of one or more hydrocolloid agents selected from the group consisting of guar gum, Arabic gum, Karaya gum, alginate, pectins, gelatin, locust bean gum, carragenan, hydroxypropyl cellulose and carboxymethyl cellulose, wherein the water : colorant ratio of the composition is between 1:1 to 10:1, preferably between 2:1 to 7:1, more preferably between 2:1 to 5:1, wherein the composition further comprises a water activity (Aw) agent adjusting the Aw value of the composition between 0.8 to 0.98, preferably between 0.85 to 0.95, more preferably between 0.88 and 0.93, wherein the agent is selected from the group consisting of glycerol, sorbitol, and dextrin, and wherein the colorant suitable for consumption is a vegetable concentrate, for example kale, beetroot or carrot concentrate. In view of a pretzel and according to the taste of the baker the coating composition is to achieve a very dark colour by mixing with up to 5 to 10 parts water to get a subtle colour on the crust. The more water is added the lighter the colour of the end product, preferably the composition of present invention is comprised of 50 to 75 wt% of water and colorant, based on the total weight of the composition.

The coating solution is developed as to replace the caustic solution in the production process of current known bakery product, such as pretzels. This invention makes it possible for both the artisanal and industrial bakers to produce fresh pretzels without the use of lye or other caustic material like soda. Because the use of lye in bakery products is prohibited in many European countries, many bakers are not allowed to make fresh pretzels at this moment. Also, this invention makes it possible for German bakers (where lye is allowed) to produce pretzels in a safe way without the use of lye.

The coating composition of present invention in comprised of water with a colorant and hydrocolloid, as defined in appended claim 1.

Because a solution of just water and a colorant will not attach properly to the frozen dough, it will result in a spotty unappealing surface of the bakery product. To prevent the spotty surface, a hydrocolloid is comprised in the coating composition of present invention such to obtain a homogeneous coating on the pretzel. The hydrocolloid or thickening agent will provide a more viscous coating composition that can stick to the dough. Particularly suitable hydrocolloids are guar gum, pectins, gelatine, locust bean gum, carrageenan or carboxymethyl cellulose.

According to a preferred embodiment, the present invention relates to the edible coating composition wherein the bakery product is a bread, pretzel or bagel, preferably a pretzel.

The coating composition must be suitable for bakery products and needs to be preserved for long storage times. The pretzel coating has a minimum shelf life of about 9 months. The preservation of the watery solution can be done by lowering the Aw-value or by lowering the pH value of the coating composition. The pH-value can be lowered by using citric acid, acetic acid, vinegar or other acidity regulators. The Aw-value can be lowered by the use of glycerol, sorbitol or dextrin or other additives that lower the Aw-value.

According to the present invention, the edible coating composition further comprises a water activity (Aw) agent for adjusting the Aw value of the composition between 0.8 to 0.98, preferably between 0.85 to 0.95, more preferably between 0.88 and 0.93, wherein the agent is selected from the group consisting of glycerol, sorbitol, and dextrin.

According to yet another preferred embodiment, the present invention relates to the edible coating composition wherein the composition comprises between 0.1 and 1.5 wt%, preferably 0.4 to 0.9 wt% of an agent for lowering the pH to at most 4, preferably a pH of at most 3, more preferably a pH of at most 2.5, wherein the pH agent is preferably selected from the group consisting of citric acid, acetic acid, malic acid, preferably citric acid.

According to the present invention, the edible coating composition comprises a colorant suitable for consumption which is a vegetable concentrate, for example kale, beetroot or carrot concentrate. Caramelized sugar is an E-number and therefore considered less preferable. The typical colour of a pretzel is brown(ish) and with the amount of colorant used the intensity of the colour of the pretzel can be chosen. Also, with the use of vegetable concentrate (for example carrot or beetroot concentrate) new colours for pretzels can be made, for example red, green or orange. A vegetable colorant can not just be used for pretzels but also for bread. Caramel may only be used for snacks like pretzels.

According to a preferred embodiment, the present invention relates to the edible coating composition wherein the mono and/or disaccharides is one or more selected from the group consisting of sugar, heat treated sugar, caramelized sugar, naturally burned sugar, preferably caramelized sugar. Caramelized sugar also contributes to the brown colour of the pretzel.

According to yet another preferred embodiment, the present invention relates to the edible coating composition wherein the composition is further comprised of malt flours or malt extracts, preferably roasted barley or wheat. The addition of malt flours or malt extracts is typically between 1 to 15 wt% of the edible coating composition and will provide improved taste to the coating composition of the pretzel or other coated bakery product.

According to another preferred embodiment, the present invention relates to the edible coating composition wherein the composition is further comprised of salt, thickening agent and/or an emulsifier agent. Emulsifiers may be added to enhance the colouring of the pretzel and to facilitate the adherence of the hydrophilic coating to the more hydrophobic dough. The amount of emulsifier is at most 1 wt% of the coating composition.

The present invention, according to a second aspect, relates to a bakery product comprising the edible coating composition of the invention as disclosed above.

According to another preferred embodiment, the present invention relates to the bakery product comprising the edible coating composition wherein the bakery product is a bread, pretzel or bagel, preferably a pretzel.

The present invention, according to a further aspect, relates to a method for the production of a bakery product, comprising the step of contacting a bakery product dough with the edible coating composition according to present invention, thereby coating the bakery product dough, followed by baking of the dough to obtain a finished bakery product.

According to another preferred embodiment, the present invention relates to the method for the production of a bakery product wherein the bakery product dough is frozen, defrosted or chilled dough.

According to yet another preferred embodiment, the present invention relates to the method for the production of a bakery product wherein the step of contacting a bakery product dough with the edible coating composition is performed by liquid curtain coating, dipping or spraying. Application of the coating composition of present invention can be done on frozen dough, defrosted dough or chilled dough. After applying the coating composition the dough can be baked immediately but it is also possible for the baker to freeze the coated dough pieces and bake the frozen dough pieces out of the freezer when pretzels are needed. Preferably the bakery product is a bread, pretzel or bagel, preferably a pretzel. The pretzels are baked in the same way as pretzels would be baked if a lye solution was used. This means in a oven of 210°C for 15 minutes with a little bit of steam.

The present invention, according to a further aspect, relates to the use of an edible coating composition of present invention for the production of a bakery product, preferably a pretzel or bagel. Besides the use as a lye replacer the edible coating composition of the present invention can also be used for the decoration of bread and other baked goods. In this functionality it can be used to give baked goods a different colour, shine or pattern. Depending on the used colorant the baked goods can be given a, for example, red or blue colour when vegetable juice is used as colorant. Or a brown colour when malt flours are used. Also the edible coating composition of the present invention can be used to replace tiger paste to create patterns on the crust of bread. It can be sprayed on the baked goods or directly applied by brush and can be used in combination with other decorating materials. For example a dark coloured coating in combination with light coloured sesame seed. The seed will better stick to the surface of the baked product than with just water and create a special effect not seen with regular tiger paste, flour or other current decoration materials for bread. The use of this invention enables the baker to be creative with baked goods in a way that is not possible with the current tools a baker has to his disposal.

The present invention will be further detailed in the following examples and figures wherein:

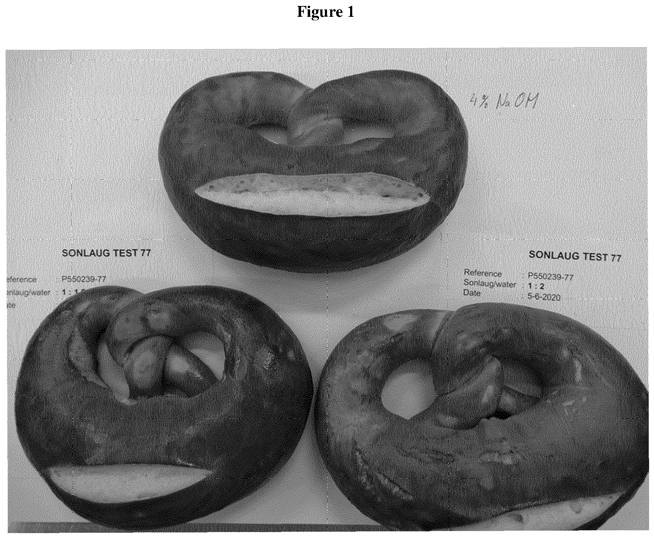

- Figure 1:: Shows a pretzel (upper pretzel) produced by the known method using the lye coating (4% NaOH) and pretzels (lower pretzels) produced using the edible coating composition of present invention using a colorant: water ratio of 1:1.5 (left) or 1:2 (right). The pretzel comprising the edible coating of present invention and a colorant: water ratio of 1:2 was substantially identical in colour, as compared to the pretzel produced via the known lye method. Furthermore, both pretzels were similar in taste, bite and feel.

### Example 1 -Coating of a pretzel with the composition of present invention, production of the pretzel

The pretzel dough is prepared by mixing, based on flour weight (% ofw), 75% flour, 48% water, 25% Soncurv Mix (Sonneveld, Art. No. 051515502000), 2.5% yeast, 4% rapeseed oil and 1.5% salt. The indicated percentages are Baker's percentage (also known as baker's math), which is a baker's notation used in the art indicating the flour-relative proportion of an ingredient used when producing bakery products as based on flour weight (ofw). In using baker's percentage, each ingredient in a formula is expressed as a percentage of the flour weight, wherein the flour weight is expressed as 100%. In the present context, when baker's percentages are used according to present invention, this will be indicated by the "ofw" phrase.

The dough is mixed slow for 4 minutes and kneaded fast for 6 minutes. After kneading the dough pieces are formed into the typical pretzel shape and subsequently proofed in a proving cabinet for 45 minutes at a temperature of 32°C and a relative humidity of 75%. After proving the dough pieces can be frozen or chilled. Frozen dough pieces are easier to handle but the freezing is not necessary.

Then, instead of subjecting the dough pieces to a lye solution, the dough is coated with the coating composition of present invention by shortly dipping the dough in a bath comprising the coating composition of present invention. The coating composition is prepared by mixing 73.2 wt% water with a colorant from carrot concentrate (colorant suitable for consumption), 25.7 wt% caramelized sugar, 0.2 wt% guar gum, and 0.9 wt% citric acid for a few minutes to obtain a homogeneous aqueous solution without lumps. The mixture to achieve the typical pretzel color would be about 1 part colorant and between 1 and 2 parts water. After applying the coating composition the dough is baked to provide the final pretzel product suitable for consumption. The pretzels are baked in the same way as pretzels would be baked if a lye solution was used; in a Rotary oven of 210°C for 15 minutes with 0.8 L of steam.

The pretzel produced without lye and having the edible coating composition of present invention was compared to a pretzel that is produced via the known lye coated method, see Figure 1. The pretzel comprising the edible coating of present invention was substantially identical in shape and colour, as compared to the pretzel produced via the known lye method. Furthermore, both pretzels were similar in taste, bite and feel.

## Claims

1. An edible coating composition for a bakery product, wherein the composition is an aqueous solution comprised of a colorant suitable for consumption, 15 to 40 wt% of mono and/or disaccharides, and 0.1 to 1 wt% of one or more hydrocolloid agents selected from the group consisting of guar gum, Arabic gum, Karaya gum, alginate, pectins, gelatin, locust bean gum, carrageenan, hydroxypropyl cellulose and carboxymethyl cellulose, wherein the water : colorant ratio of the composition is between 1:1 to 10:1, preferably between 2:1 to 7:1, more preferably between 2:1 to 5:1, wherein the composition further comprises a water activity (Aw) agent adjusting the Aw value of the composition between 0.8 to 0.98, preferably between 0.85 to 0.95, more preferably between 0.88 and 0.93, wherein the agent is selected from the group consisting of glycerol, sorbitol, and dextrin, and wherein the colorant suitable for consumption is a vegetable concentrate, for example kale, beetroot or carrot concentrate.

2. Edible coating composition according to claim 1, wherein the bakery product is a bread, pretzel or bagel, preferably a pretzel.

3. Edible coating composition according to claim 1 or 2, comprises between 0.1 and 1.5 wt% of an agent for lowering the pH to at most 4, preferably a pH of at most 3, more preferably a pH of at most 2.5, wherein the pH agent is preferably selected from the group consisting of citric acid, acetic acid, malic acid, preferably citric acid.

4. Edible coating composition according to any one of the claims 1 to 3, wherein the mono and/or disaccharides is one or more selected from the group consisting of sugar, heat treated sugar, caramelized sugar, naturally burned sugar, preferably caramelized sugar.

5. Edible coating composition according to any one of the claims 1 to 4, wherein the composition is further comprised of malt flours or malt extracts, preferably roasted barley or wheat.

6. Edible coating composition according to any one of the claims 1 to 5, wherein the composition is further comprised of salt, thickening agent and/or an emulsifier agent.

7. A bakery product comprising the edible coating composition according to any one of the claims 1 to 6.

8. Bakery product according to claim 7, wherein the bakery product is a bread, pretzel or bagel, preferably a pretzel.

9. A method for the production of a bakery product, comprising the step of contacting a bakery product dough with the edible coating composition according to any one the claims 1 to 6, thereby coating the bakery product dough, followed by baking of the dough to obtain a finished bakery product.

10. Method for the production of a bakery product according to claim 9, wherein the bakery product dough is frozen, defrosted or chilled dough.

11. Method for the production of a bakery product according to claim 9 or 10, wherein the step of contacting a bakery product dough with the edible coating composition is performed by liquid curtain coating, dipping or spraying.

12. Method for the production of a bakery product according to any one of the claims 9 to 11, wherein the bakery product is a bread, pretzel or bagel, preferably a pretzel.

13. Use of an edible coating composition according to any one the claims 1 to 6 for the production of a bakery product, preferably a pretzel or bagel.

## Patentansprüche

1. Essbare Überzugszusammensetzung für ein Backprodukt, wobei die Zusammensetzung eine wässrige Lösung ist, die aus einem zum Verzehr geeigneten Farbstoff, zu 15 bis 40 Gew.-% aus Mono- und/oder Disacchariden und zu 0,1 bis 1 Gew.-% aus einem oder mehreren Hydrokolloidmittel besteht, die aus der Gruppe ausgewählt sind, bestehend aus Guarkernmehl, arabischem Gummi, Karayagummi, Alginat, Pektinen, Gelatine, Johannisbrotkernmehl, Carrageenan, Hydroxypropylzellulose und Carboxymethylzellulose, wobei das Wasser-zu-Farbstoff-Verhältnis der Zusammensetzung zwischen 1 : 1 und 10 : 1, vorzugsweise zwischen 2 : 1 und 7 : 1, mehr bevorzugt zwischen 2 : 1 und 5 : 1 liegt, wobei die Zusammensetzung ferner ein Mittel mit Wasseraktivität (Aw) umfasst, das den Aw-Wert der Zusammensetzung zwischen 0,8 und 0,98, vorzugsweise zwischen 0,85 und 0,95, mehr bevorzugt zwischen 0,88 und 0,93 einstellt, wobei das Mittel ausgewählt ist aus der Gruppe bestehend aus Glycerin, Sorbitol und Dextrin, und wobei der zum Verzehr geeignete Farbstoff ein Gemüsekonzentrat ist, beispielsweise Grünkohl-, Rote-Beete- oder Karottenkonzentrat.

2. Essbare Überzugszusammensetzung nach Anspruch 1, wobei das Backprodukt ein Brot, eine Brezel oder ein Bagel, vorzugsweise eine Brezel ist.

3. Essbare Überzugszusammensetzung nach Anspruch 1 oder 2, die zwischen 0,1 und 1,5 Gew.-% eines Mittels zum Senken des pH-Werts auf höchstens 4, vorzugsweise einen pH-Wert von höchstens 3, mehr bevorzugt einen pH-Wert von höchstens 2,5 umfasst, wobei das pH-Mittel vorzugsweise ausgewählt ist aus der Gruppe bestehend aus Zitronensäure, Essigsäure, Äpfelsäure, vorzugsweise Zitronensäure.

4. Essbare Überzugszusammensetzung nach einem der Ansprüche 1 bis 3, wobei die Mono- und/oder Disacchariden eines oder mehrere sind, die ausgewählt sind aus der Gruppe bestehend aus Zucker, wärmebehandeltem Zucker, karamellisiertem Zucker, natürlich gebranntem Zucker, vorzugsweise karamellisiertem Zucker.

5. Essbare Überzugszusammensetzung nach einem der Ansprüche 1 bis 4, wobei die Zusammensetzung ferner aus Malzmehl oder Malzextrakte, vorzugsweise geröstete Gerste oder Weizen, besteht.

6. Essbare Überzugszusammensetzung nach einem der Ansprüche 1 bis 5, wobei die Zusammensetzung ferner aus Salz, einem Verdickungsmittel und/oder ein Emulgatormittel besteht.

7. Backprodukt, umfassend die essbare Überzugszusammensetzung nach einem der Ansprüche 1 bis 6.

8. Backprodukt nach Anspruch 7, wobei die Backprodukt ein Brot, eine Brezel oder ein Bagel, vorzugsweise eine Brezel ist.

9. Verfahren zum Herstellen eines Backprodukts, umfassend den Schritt des Inkontaktbringens eines Backproduktteigs mit der essbaren Überzugszusammensetzung nach einem der Ansprüche 1 bis 6, wodurch der Backproduktteig überzogen wird, gefolgt von einem Backen des Teigs, um ein fertiges Backprodukt zu erhalten.

10. Verfahren zum Herstellen eines Backprodukts nach Anspruch 9, wobei der Backproduktteig gefrorener, aufgetauter oder gekühlter Teig ist.

11. Verfahren zum Herstellen eines Backprodukts nach Anspruch 9 oder 10, wobei der Schritt des Inkontaktbringens eines Backproduktteigs mit der essbaren Überzugszusammensetzung durch Flüssigkeitsvorhangbeschichtung, Eintauchen oder Besprühen durchgeführt wird.

12. Verfahren zum Herstellen eines Backprodukts nach einem der Ansprüche 9 bis 11, wobei das Backprodukt ein Brot, eine Brezel oder ein Bagel, vorzugsweise eine Brezel ist.

13. Verwendung einer essbaren Überzugszusammensetzung nach einem der Ansprüche 1 bis 6 zum Herstellen eines Backprodukts, vorzugsweise einer Brezel oder eines Bagels.

## Revendications

1. Composition d'enrobage comestible pour un produit de boulangerie, dans laquelle la composition est une solution aqueuse constituée d'un colorant adapté à la consommation, de 15 à 40 % en poids de mono et/ou de disaccharides et de 0,1 à 1 % en poids d'un ou plusieurs agents hydrocolloïdes choisis dans le groupe constitué par la gomme de guar, la gomme arabique, la gomme de Karaya, l'alginate, les pectines, la gélatine, la gomme de caroube, le carraghénane, l'hydroxypropylcellulose et la carboxyméthylcellulose, dans laquelle le rapport eau:colorant de la composition est compris entre 1:1 et 10:1, de préférence entre 2:1 et 7:1, plus préférablement entre 2:1 et 5:1, dans laquelle la composition comprend en outre un agent d'activité de l'eau (Aw) ajustant la valeur Aw de la composition entre 0,8 et 0,98, de préférence entre 0,85 et 0,95, plus préférablement entre 0,88 et 0,93, dans laquelle l'agent est choisi dans le groupe constitué par le glycérol, le sorbitol et la dextrine, et dans laquelle le colorant adapté à la consommation est un concentré de légume, par exemple un concentré de chou kale, de betterave ou de carotte.

2. Composition d'enrobage comestible selon la revendication 1, dans laquelle le produit de boulangerie est un pain, un bretzel ou un bagel, de préférence un bretzel.

3. Composition d'enrobage comestible selon la revendication 1 ou 2, comprenant entre 0,1 et 1,5 % en poids d'un agent permettant d'abaisser le pH à 4 au maximum, de préférence un pH de 3 au maximum, plus préférablement un pH de 2,5 au maximum, dans laquelle l'agent de pH est de préférence choisi dans le groupe constitué par l'acide citrique, l'acide acétique, l'acide malique, de préférence l'acide citrique.

4. Composition d'enrobage comestible selon l'une quelconque des revendications 1 à 3, dans laquelle les mono et/ou les disaccharides sont un ou plusieurs choisis dans le groupe constitué par le sucre, le sucre traité thermiquement, le sucre caramélisé, le sucre brûlé naturellement, de préférence le sucre caramélisé.

5. Composition d'enrobage comestible selon l'une quelconque des revendications 1 à 4, dans laquelle la composition est en outre constituée de farines de malt ou d'extraits de malt, de préférence d'orge ou de blé torréfiés.

6. Composition d'enrobage comestible selon l'une quelconque des revendications 1 à 5, dans laquelle la composition est en outre constituée de sel, d'un agent épaississant et/ou d'un agent émulsifiant.

7. Produit de boulangerie comprenant la composition d'enrobage comestible selon l'une quelconque des revendications 1 à 6.

8. Produit de boulangerie selon la revendication 7, dans lequel le produit de boulangerie est un pain, un bretzel ou un bagel, de préférence un bretzel.

9. Procédé de production d'un produit de boulangerie, comprenant l'étape consistant à mettre en contact une pâte de produit de boulangerie avec la composition d'enrobage comestible selon l'une quelconque des revendications 1 à 6, ce qui permet d'enrober la pâte de produit de boulangerie, suivie de la cuisson de la pâte pour obtenir un produit de boulangerie fini.

10. Procédé de fabrication d'un produit de boulangerie selon la revendication 9, dans lequel la pâte de produit de boulangerie est une pâte congelée, décongelée ou réfrigérée.

11. Procédé de fabrication d'un produit de boulangerie selon la revendication 9 ou 10, dans lequel l'étape consistant à mettre en contact une pâte de produit de boulangerie avec la composition d'enrobage comestible est réalisée par enrobage par rideau liquide, trempage ou pulvérisation.

12. Procédé de fabrication d'un produit de boulangerie selon l'une quelconque des revendications 9 à 11, dans lequel le produit de boulangerie est un pain, un bretzel ou un bagel, de préférence un bretzel.

13. Utilisation d'une composition d'enrobage comestible selon l'une quelconque des revendications 1 à 6 pour la production d'un produit de boulangerie, de préférence un bretzel ou un bagel.
